# EUROPÄISCHE PATENTSCHRIFT

(11) **EP 0 470 378 B1**
(45) Veröffentlichungstag und Bekanntmachung des Hinweises auf die Patenterteilung: **16.10.1996**
(21) Anmeldenummer: 91111372.8
(22) Anmeldetag: 09.07.1991
(51) Int. Cl.: H01L 41/09

(54) **Schwingungsmotor**
Vibration wave motor
Moteur à ondes de vibrations

(30) Priorität: 08.08.1990 DE 4025129
(43) Veröffentlichungstag der Anmeldung: 12.02.1992
(73) Patentinhaber: ROBERT BOSCH GMBH, 70442 Stuttgart (DE)
(72) Erfinder: Taubitz, Bernd, W-7141 Schwieberdingen (DE); Haegele, Karl-Heinz, Dr. Dipl.-Phys., W-7143 Vaihingen/Enz (DE); Kramer, Claus, Dr. Dipl.-Ing., W-7122 Besigheim (DE)

(56) Entgegenhaltungen:
- US-A- 4 871 937
- PATENT ABSTRACTS OF JAPAN vol. 9, no. 316 (M-438)(2039) 12. Dezember 1985 & JP- A-60 151 422
- PATENT ABSTRACTS OF JAPAN vol. 12, no. 379 (E-667) 11. Oktober 1988 & JP-A-63 124 779

## Beschreibung

### Stand der Technik

Die Erfindung betrifft einen Schwingungsmotor der im Oberbegriff des Anspruchs 1 definierten Gattung.

Schwingungsmotoren dieser Art sind unter vielfältiger Bezeichnung bekannt. So werden sie auch Ultraschallmotoren, Piezo-Wanderwellenmotoren, Vibrationsmotoren bzw. im englischsprachigen Traveling Wave Ultrasonic Motor, Vibration Wave Motor, Ultrasonic oder Piezoelectric Motor genannt. Ausführungsbeispiele solcher Schwingungsmotoren finden sich z.B. in US-PS 4 771 203, US-PS 4 739 212, US-PS 4 755 705, Prof. Dr. C. Reuber "Piezo-Wanderwellen-Motor", Elektronik Journal 23/89, Seite 43,44.

Bei einem solchen Schwingungsmotor wird mittels des Piezoanregungssystems der Stator in Schwingung versetzt, in Form einer rotierenden mechanischen Wanderwelle. Durch das üblicherweise als Tellerfeder ausgebildete Andruckglied wird eine schlupffreie Verbindung zwischen Motor und Stator hergestellt, mit der die Kraft auf den Rotor übertragen und dieser in Drehbewegung versetzt wird.

Durch das Anpressen von Rotor und Stator zwecks schlupffreier Verbindung ist die mit dem Rotor drehfest verbundene Abtriebswelle im stromlosen Zustand des Motors blockiert. Ein Motor dieser Bauart kommt daher für solche Anwendungsfälle nicht in Betracht, bei welchen eine Drehung der Abtriebswelle im stromlosen Zustand des Motors erforderlich ist. Ein Beispiel für einen solchen Anwendungsfall ist ein Drosselklappensteller bei Verbrennungsmotoren, bei welchen aus Sicherheitsgründen eine Rückstellfeder dafür sorgt, daß bei stromlosem Drosselklappensteller die Drosselklappe immer in die Schließstellung zurückgeführt wird.

### Vorteile der Erfindung

Der erfindungsgemäße Schwingungsmotor mit den kennzeichnenden Merkmalen des Anspruchs 1 hat demgegenüber den Vorteil, daß durch die mit stromlosem Motor einsetzende Abkühlung des temperaturabhängig formveränderlichen Elements die Anpreßkraft zwischen Stator und Rotor wegfällt und damit der Rotor samt Abtriebswelle bei stromlosem Motor frei drehen kann. Damit ist dem Schwingungsmotor eine Vielzahl neuer Anwendungsgebiete erschlossen, in welchen eine bei stromlosem Motor freidrehende Abtriebswelle benötigt wird.

Durch die in den weiteren Ansprüchen aufgeführten Maßnahmen sind vorteilhafte Weiterbildungen und Verbesserungen des im Anspruch 1 angegebenen Schwingungsmotors möglich.

In einer bevorzugten Ausführungsform der Erfindung wird als temperaturabhängig formveränderliches Element ein Memory-Metall-Element mit Formgedächtnis, sog. Shape Memory Effect- (SME-) Element verwendet. Solche SME-Elemente sind bekannt und beispielsweise in A. Fryatt "Metall für Formgedächtnis", Schweizer Maschinenmarkt Nr. 23/1982, Seite 60 oder in DE 38 09 909 Al beschrieben. SME- oder Memory-Metall-Elemente gibt es mit Einweg- oder Zweiwegeffekt. Beim Einwegeffekt wird die ursprüngliche Form nur beim Erwärmen wieder angenommen. In den anderen Formzustand muß das Element durch eine äußere Krafteinwirkung (Rückstellelement) gebracht werden. Beim Zweiwegeffekt liegt ein reversibles temperaturabhängiges Formveränderungsverhalten vor. Bei der Formänderung können diese Memory-Metall-Elemente Arbeit leisten, z.B. Stellkräfte ausüben.

Bei dem erfindungsgemäßen Schwingungsmotor kann die Ausgestaltung des SME-Elements in verschiedener Weise erfolgen. In der Ausbildung als Druckfeder werden bevorzugt SME-Elemente auf Kupfer-Basis verwendet. Sie üben ihre Stellkräfte in Druckrichtung aus. Die Druckfeder nimmt oberhalb ihrer Formänderungstemperatur ihre ursprüngliche Federform an und kann somit Druckkräfte auf den Rotor aufbringen. Unterhalb der Formänderungstemperatur zieht die Druckfeder sich auf Blocklänge zusammen oder läßt sich durch ein Rückstellelement auf Blocklänge zusammendrücken, die sie beibehält, bis die Formänderungstemperatur wieder überschritten wird.

In der Ausführung des SME-Elements als Zugdraht werden Nickel-Titan- (Ni-Ti) Legierungen verwendet. Ni-Ti-Elemente üben ihre Stellkraft in Zugrichtung aus und ziehen sich oberhalb der Formänderungstemperatur um eine definierte Länge zusammen. Unterhalb der Formänderungstemperatur können sie wieder auf die ursprüngliche Länge gelängt werden (Einwegeffekt) oder dehnen sich selbst aus (Zweiwegeffekt).

Die Beheizung der SME-Elemente kann entweder durch direkte Stromzufuhr oder durch eine separate Heizwendel erfolgen. Die Beheizung erfolgt stets synchron mit Einschalten des Motors. Mit Abschalten des Motors wird auch der Heizstrom abgeschaltet.

In einer weiteren Ausführungsform der Erfindung ist das temperaturabhängig formveränderliche Element als Thermobimetall ausgebildet. Bevorzugt wird hier ein als Tellerfeder ausgebildetes Thermobimetall-Element verwendet, das bei Stromdurchfluß eine Formänderung der Tellerfeder in Axialrichtung bewirkt.

### Zeichnung

Die Erfindung ist anhand von in der Zeichnung dargestellten Ausführungsbeispielen in der nachfolgenden Beschreibung näher erläutert. Es zeigen:

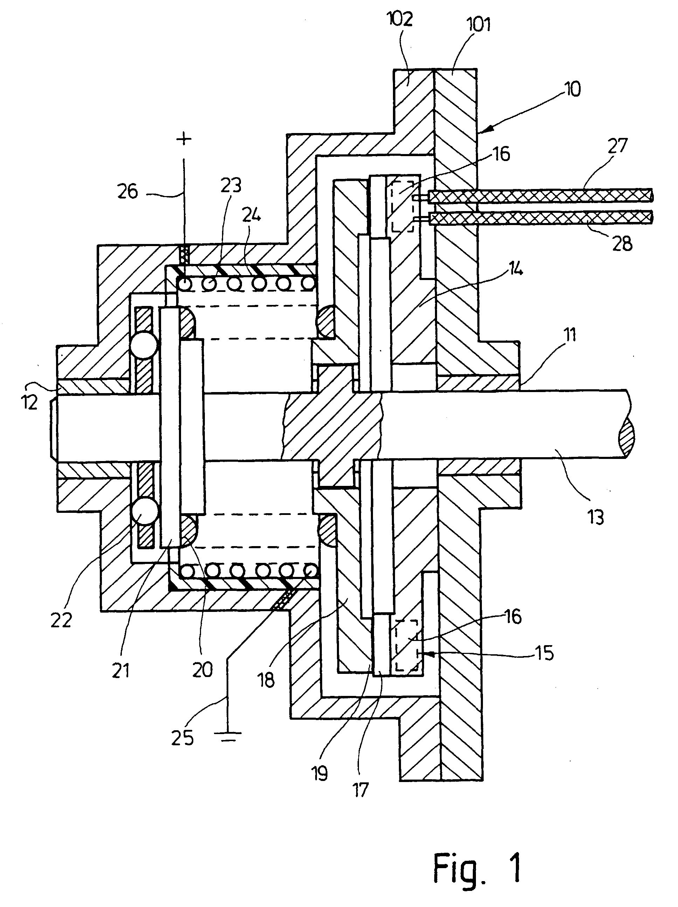

- Fig. 1: jeweils einen Längsschnitt eines
- bis 3: Schwingungsmotors gemäß einem ersten, zweiten und dritten Ausführungsbeispiel.

### Beschreibung der Ausführungsbeispiele

Der in Fig. 1 im Längsschnitt schematisch dargestellte Schwingungsmotor oder Ultraschall-Motor weist ein zweiteiliges Motorgehäuse 10 auf, das aus einer Grundplatte 101 und aus einer an der Grundplatte 101 verschraubten Gehäusekappe 102 besteht. Zentral in der Grundplatte 101 und in der Gehäusekappe 102 ist jeweils ein als Gleitlager ausgebildetes Radiallager 11,12 gehalten, in welchen die Abtriebswelle 13 gelagert ist. Koaxial zur Abtriebswelle 13 ist an der Grundplatte 101 ein scheibenförmiger Stator 14 mit einer Durchtrittsöffnung für die Abtriebswelle 13 und mit einem axial vorstehenden Ringbund 17 befestigt, der ein Piezoanregungssystem 15 trägt. Das Piezoanregungssystem 15 weist in bekannter Weise eine Vielzahl von Piezoantriebselementen 16 auf, die unterhalb des Ringbunds 17 in Umfangsrichtung am Stator 14 um gleiche Drehwinkel versetzt angeordnet sind. Auf der Abtriebswelle 13 sitzt drehfest und axial verschieblich ein scheibenförmiger Rotor 18, der einen zum Stator 14 hin axial vorspringenden Ringbund 19 trägt, dessen radiale Breite in etwa der des Ringbunds 17 am Stator 14 ist. Stator 14 und Rotor 18 sind im Bereich der Ringbunde 17,19 durch eine Druckfeder 20 aneinandergepreßt, die sich einerseits am Rotor 18 und andererseits an einem mit der Abtriebswelle 13 fest verbundenen Flansch 21 abstützt. Um die dadurch in den Radiallagern 11,12 auftretenden Axialkräfte aufzunehmen, stützt sich der Flansch 21 über ein Axiallager 22 am Boden der Gehäusekappe 102 ab.

Die Druckfeder 20 ist aus Memory-Metall, hier Messing, hergestellt. Sog. Memory-Metall-Elemente mit Formgedächtnis, auch SME- (Shape Memory Effect-) Elemente sind bekannt, so daß ihre Funktionsweise hier nicht näher beschrieben zu werden braucht. Die Druckfeder 20 ist ein SME-Element mit Zweiwegeeffekt, d.h. sie nimmt oberhalb und unterhalb ihrer Formänderungstemperatur von z.B. 70^{o}C ihre jeweilige Form ein, so daß ein reversibler Prozeß zwischen zwei vorgegebenen Formzuständen der Druckfeder 20 erzeugt wird. Unterhalb der Formänderungstemperatur ist die Druckfeder 20 auf Blocklänge zusammengedrückt, während sie oberhalb der Formänderungstemperatur ihre vorgegebene Federlänge einnimmt. Infolge dieser Formänderung ist die Druckfeder 20 in der Lage, oberhalb ihrer Formänderungstemperatur mit einer axialen Andruckkraft auf den Rotor 18 einzuwirken, der dadurch an den Stator 14 angepreßt wird. Zieht sich die Druckfeder 20 unterhalb ihrer Formänderungstemperatur auf Blocklänge zusammen, so greift keine axiale Kraft am Rotor 18 an. Zur Erzeugung der Formänderungstemperatur ist die Druckfeder 20 koaxial von einer zylinderförmigen Heizspirale 23 umgeben, die in einer im Motorgehäuse 10 befestigten Isolierstoffhülse 24 eingelegt ist. Die Heizspirale 23 ist über isoliert durch die Gehäusekappe 102 hindurchgeführte Zuleitungen 25,26 an eine Heizstromquelle anschließbar. Der hier nicht dargestellte Schalter zum Einschalten des Heizstromes für die Heizspirale 23 wird synchron mit dem Motorschalter betätigt, so daß die Heizspirale 23 ausschließlich während des Motorbetriebs eingeschaltet ist und bei stromlosem Motor ebenfalls stromlos ist. Das Piezoanregungssystem 15 ist über isoliert durch die Grundplatte 101 hindurchgeführte Anschlußkabel 27,28 mit einer entsprechenden Steuervorrichtung verbunden.

Die Funktionsweise des Schwingungsmotors ist wie folgt:

Im stromlosen Zustand des Motors steht der Rotor 18 still, die Druckfeder 20 ist auf Blocklänge zusammengezogen, so daß sie keine axiale Kraft auf den Rotor 18 ausübt. Die Abtriebswelle 13 kann durch eine von außen angreifende Kraft, beispielsweise durch eine Rückstellfeder, problemlos gedreht werden, wobei nur die Reibkräfte in den Radiallagern 11,12 zu überwinden sind.

Mit Einschalten des Motors wird auch die Heizspirale 23 bestromt. Die Druckfeder 20 wird erwärmt und ist bestrebt, oberhalb ihrer Formänderungstemperatur ihre ursprüngliche Federlänge einzunehmen, wodurch sich die axiale Länge der Druckfeder 20 erhöht. Damit stützt sich die Druckfeder 20 am Rotor 18 ab und preßt diesen gegen den Stator 14. Mit Einschalten des Motors wird das Piezoanregungssystem 15 angesteuert, das den Stator 14 in Schwingungen versetzt, wobei am Stator 14 eine rotierende mechanische Wanderwelle entsteht, die den schlupffrei an dem Stator 14 angepreßten Rotor 18 mitnimmt und dadurch in Rotation versetzt. Mit Abschalten des Motors wird auch der Heizstrom für die Heizspirale 23 abgeschaltet. Die Druckfeder 20 kühlt sich ab und zieht sich unterhalb ihrer Formänderungstemperatur auf Blocklänge zusammen. Der Anpreßdruck zwischen Rotor 18 und Stator 14 ist aufgehoben.

Die Druckfeder 20 kann auch als SME-Element mit Einwegeffekt ausgebildet werden. In diesem Fall ist ein Rückstellelement vorzusehen, das bei Abkühlung der Druckfeder 20 unterhalb ihrer Formänderungstemperatur die Druckfeder 20 auf Blocklänge zusammendrückt. Ein solches Rückstellelement kann beispielsweise von einer Zugfeder gebildet werden, die einerseits am Rotor 18 und andererseits am Flansch 21 befestigt ist.

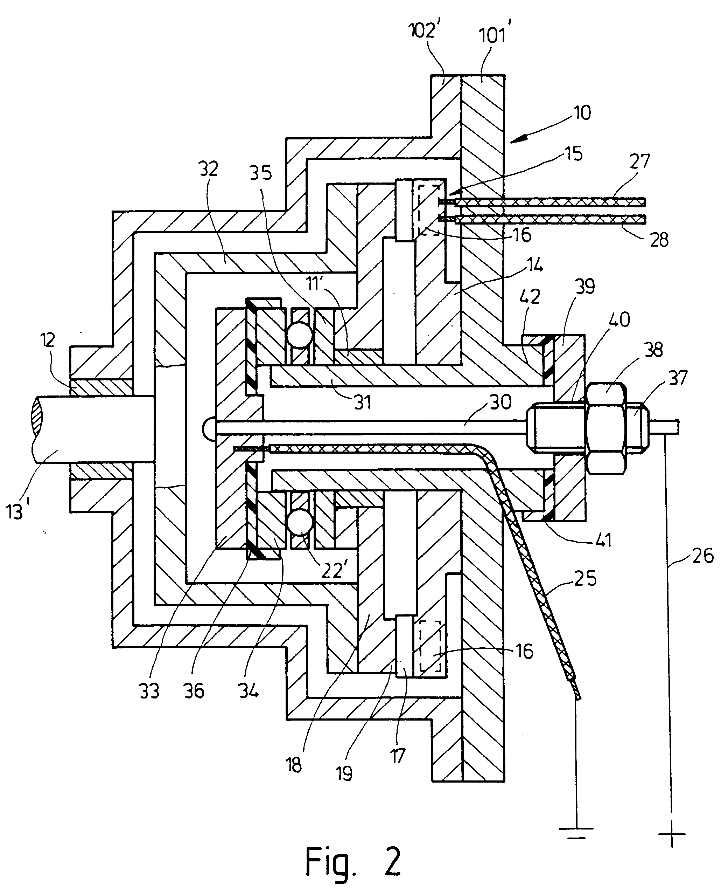

Der in Fig. 2 im Längsschnitt dargestellte Schwingungsmotor unterscheidet sich von dem nach Fig. 1 im wesentlichen dadurch, daß die Anpreßkraft, die den Rotor 18 an den Stator 14 andrückt, in anderer Weise erzeugt wird. Dadurch ist auch eine geringe Modifikation des konstruktiven Aufbaus erforderlich. Soweit Teile des Motors mit solchen in Fig. 1 übereinstimmen, sind sie mit gleichen Bezugszeichen versehen.

Die Anpreßkraft zwischen Rotor 18 und Stator 14 wird wiederum durch ein Memory-Metall-Element aufgebracht, das hier als Zugdraht 30 ausgebildet ist, der bevorzugt aus einer Nickel-Titan-Legierung hergestellt ist. Der Zugdraht 30, der wiederum ein SME-Element mit Zweiwegeeffekt bildet, zieht sich oberhalb seiner Formänderungstemperatur um eine vorgegebene Axiallänge zusammen und ist dadurch in der Lage, eine Zugkraft auszuüben. Die Grundplatte 101' des Motorgehäuses 10 trägt einstückig einen hohlzylindrischen Lagerzapfen 31, der axial ins Gehäuseinnere vorspringt. Auf dem Lagerzapfen 31 ist der Rotor 18 mittels eines Radiallagers 11' gelagert. Die Abtriebswelle 13' ist in einem Radiallager 12 in der Gehäusekappe 102', das koaxial zum Radiallager 11' angeordnet ist, gelagert und über eine Kupplungsglocke 32 mit dem Rotor 18 starr verbunden, wobei die Kupplungsglocke 32 den Lagerzapfen 31 mit Abstand übergreift. Der Zugdraht 30 durchzieht den hohlzylindrischen Lagerzapfen 31 und ist im Innern an einer Andruckplatte 33 befestigt, die sich über ein Axiallager 22' am Rotor 18 abstützt. Zwischen dem Axiallager 22' und dem Rotor 18 einerseits und der Andruckplatte 33 andererseits ist jeweils ein Zwischenring 34 bzw. 35 angeordnet. Zwischen dem Zwischenring 35 und der Andruckplatte 33 ist eine Isolierscheibe 36 eingelegt, welche die Andruckplatte 33 gegenüber dem Zwischenring 35 elektrisch isoliert. Am anderen Ende ist der Zugdraht 30 in einem Gewindebolzen 37 befestigt, auf dem eine Stellmutter 38 verschraubt ist. Die Stellmutter 38 stützt sich auf eine Stützplatte 39 mit Durchtrittsöffnung 40 für den Gewindebolzen 37 ab, die sich ihrerseits über eine Isolierscheibe 41 auf einem Ringsteg 42 abstützt, der koaxial zum Lagerzapfen 31 an der Grundplatte 101 nach außen vorsteht. Zur Beheizung des Zugdrahts 30 ist eine Zuleitung 25 isoliert durch die Grundplatte 101 hindurchgeführt und mit der Andruckplatte 33 verbunden. Eine zweite Zuleitung 26 ist mit dem Gewindebolzen 37 oder mit dem durch den Gewindebolzen 37 hindurchgeführten Zugdraht 30 verbunden. Die beiden Zuleitungen 25,26 sind über einen hier nicht dargestellten Schalter mit einer Heizstromquelle verbunden. Im übrigen stimmt der Aufbau des Motors mit dem in Fig. 1 überein.

Bei stromlosem Motor nimmt der Zugdraht 30 seine vorgegebene axiale Länge ein, die mittels der Stellmutter 38 so eingestellt werden kann, daß die Andruckplatte 33 spiellos über das Axiallager 22' an dem Rotor 18 anliegt, ohne eine axiale Kraft auf diesen auszuüben. Mit Einschalten des Motors wird auch die Heizstromquelle eingeschaltet und der Zugdraht 30 erwärmt. Mit Überschreiten seiner Formänderungstemperatur verkürzt sich der Zugdraht 30 und übt dabei eine Zugkraft auf die Andruckplatte 33 auf. Diese wiederum erzeugt eine axiale Druckkraft, die den Rotor 18 auf den Stator 14 aufpreßt. Durch die schlupffreie Verbindung zwischen Rotor 18 und Stator 14 wird der Rotor 18 in Drehung versetzt. Nach Abschalten des Motors wird auch der Heizstrom durch den Zugdraht 30 abgeschaltet. Letzterer kühlt sich ab und längt sich unterhalb seiner Formänderungstemperatur. Der Rotor 18 kann sich relativ zum Stator 14 wieder frei drehen.

Auch hier kann der Zugdraht 30 als Memory-Metall-Element mit Einwegeffekt ausgebildet werden. In diesem Fall muß ein Rückstellelement vorgesehen werden, daß den Zugdraht 30 unterhalb seiner Formänderungstemperatur wieder auf seine ursprüngliche Länge dehnt. Ein solches Rückstellement kann beispielsweise durch eine Druckfeder realisiert werden, die sich jeweils isoliert einerseits an der Andruckplatte 33 und andererseits an der Stützplatte 39 abstützt.

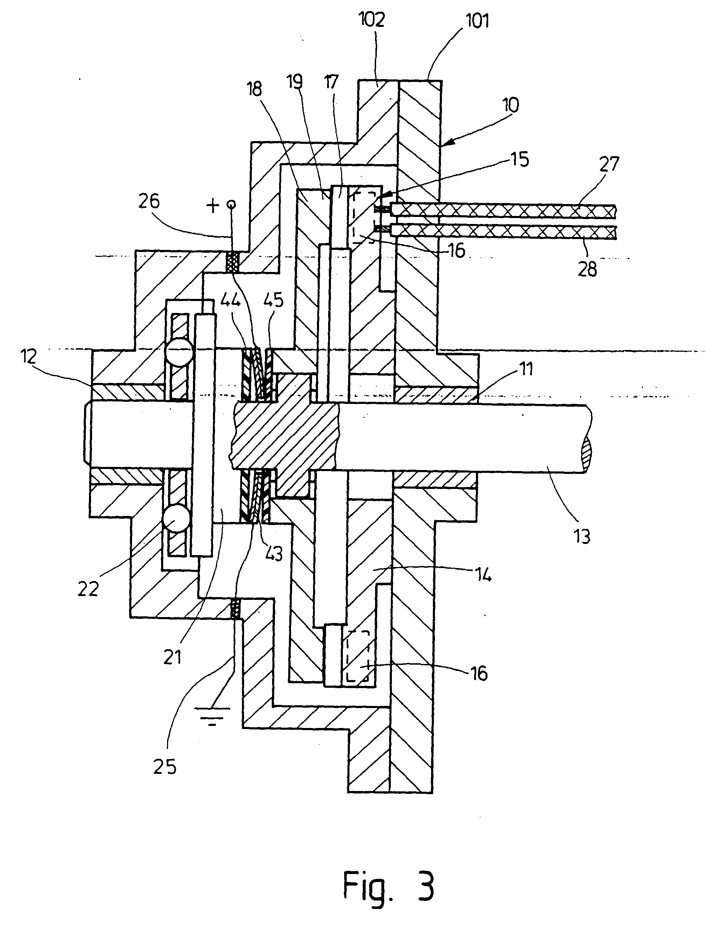

Der in Fig. 3 im Längsschnitt dargestellte Schwingungsmotor stimmt in seinem konstruktiven Aufbau nahezu identisch mit dem Schwingungsmotor in Fig. 1 überein, so daß gleiche Bauteile mit gleichen Bezugszeichen versehen sind. Der Anpreßdruck zwischen Rotor 18 und Stator 14 wird hier von einer Tellerfeder 43 erzeugt, die als Thermobimetall ausgeführt ist. Die Tellerfeder 43 stützt sich jeweils unter Zwischenlage einer Isolierscheibe 44,45 einerseits am Rotor 18 und andererseits am Flansch 21 der Abtriebswelle 13 ab. Die Tellerfeder 43 ist über Zuleitungen 25 und 26, die isoliert durch die Gehäusekappe 102 hindurchgeführt sind, mit einer Heizstromquelle verbunden, die synchron mit dem Ein- und Ausschalten des Motors angeschlossen bzw. abgetrennt wird. Unterhalb ihrer Formänderungstemperatur ist die Tellerfeder 43 annähernd gestreckt und liegt spiellos und drucklos zwischen dem Rotor 18 und dem Flansch 21. Oberhalb ihrer Formänderungstemperatur krümmt sich die Tellerfeder 43 in der in Fig. 3 gezeichneten Weise und preßt infolge ihrer Formänderung den Rotor 18 schlupffrei an den Stator 14 an. Die Wirkungsweise des Schwingungsmotors ist die gleiche wie vorstehend beschrieben.

Zur Sicherstellung des Freilaufs der Abtriebswelle 13 bei stromlosem Motor ist es selbstverständlich möglich, die Abtriebswelle 13 in zwei Wellenabschnitte aufzuteilen und diese über eine Elektromagnetkupplung miteinander zu verbinden. Auf dem einen der Wellenabschnitte sitzt der Rotor 18, der von einer Druckfeder permanent an den Stator 14 angedrückt wird. Der über die Elektromagnetkupplung angekuppelte andere Wellenabschnitt ragt aus dem Motorgehäuse heraus und bildet beispielsweise eine Stellwelle. Die Elektromagnetkupplung wird synchron mit dem Motor ein- bzw. abgeschaltet. Eine solche konstruktive Lösung des Freilaufs ist jedoch den vorstehend beschriebenen Lösungen im Hinblick auf Herstellungskosten und Bauvolumen weit unterlegen.

## Patentansprüche

1. Schwingungsmotor mit einem ein Piezoanregungssystem enthaltenden scheibenförmigen Stator, mit einem dazu parallel ausgerichteten, auf einer Abtriebswelle drehfest sitzenden scheibenförmigen Rotor und mit einem Rotor und Stator in Achsrichtung aneinander anpressenden Andruckglied, dadurch gekennzeichnet, daß das Andruckglied als temperaturabhängig formveränderliches, kraftübertragendes Element (20;30;43) ausgebildet ist, das im Motorbetrieb auf einer oberhalb eines Temperaturpunktes, bei welcher die Formänderung eintritt, liegenden Temperatur gehalten und so angeordnet ist, daß durch die mit Unterschreiten des Temperaturpunktes einsetzende Formänderung der Anpreßdruck zwischen Rotor (18) und Stator (14) wegfällt.

2. Motor nach Anspruch 1, dadurch gekennzeichnet, daß das temperaturabhängig formveränderliche Element ein Memory-Metall-Element mit Formgedächtnis, ein sog. SME- (Shape Memory Effect-) Element ist.

3. Motor nach Anspruch 2, dadurch gekennzeichnet, daß das SME-Element eine Druckfeder (20) ist, die unterhalb ihres Temperaturpunktes für die Formänderung sich etwa auf Blocklänge zusammenzieht bzw. zusammendrücken läßt und sich oberhalb dieses Temperaturpunktes auf Federlänge ausdehnt, und daß die Druckfeder (20) sich einerseits am axial verschieblichen Rotor (18) und andererseits an der Abtriebswelle (13) abstützt.

4. Motor nach Anspruch 3, dadurch gekennzeichnet, daß die Druckfeder (20) von einer koaxialen Heizspirale (23) umgeben ist, deren Heizleistung so ausgelegt ist, daß der Temperaturpunkt für die Formänderung der Druckfeder (20) durch Bestromen der Heizspirale (23) überschritten wird.

5. Motor nach Anspruch 2, dadurch gekennzeichnet, daß das SME-Element ein Zugdraht (30) ist, der oberhalb seines Temperaturpunktes für die Formänderung sich auf eine kleinere axiale Länge zusammenzieht und sich unterhalb dieses Temperaturpunktes auf die ursprüngliche Länge ausdehnt bzw. ausdehnen läßt, daß der Zugdraht (30) in einem hohlzylindrischen Lagerzapfen (31) verläuft, auf dem der Rotor (18) drehbar und axial verschieblich sitzt, und daß der Zugdraht (30) einerseits am Lagerzapfen (31) und andererseits an einer Andruckplatte (33) festgespannt ist, die sich über ein auf dem Lagerzapfen (31) gehaltenes Axiallager (22') an dem Rotor (18) abstützt.

6. Motor nach Anspruch 5, dadurch gekennzeichnet, daß der vorzugsweise aus einer Nickel-Titan-Legierung bestehende Zugdraht (30) stromdurchfließbar ist und daß die stromstärke so bemeßbar ist, daß der Temperaturpunkt für die Formänderung mit Bestromung des Zugdrahtes (30) überschritten wird.

7. Motor nach Anspruch 5 oder 6, dadurch gekennzeichnet, daß die Abtriebswelle (13) in einem mit dem Lagerzapfen (31) fluchtenden Radiallager (12'), vorzugsweise Gleitlager, gehalten und über eine Andruckplatte (33), Axiallager (22') und Lagerzapfen (31) übergreifende Kupplungsglocke (32) mit dem Rotor (18) drehfest verbunden ist.

8. Motor nach Anspruch 1, dadurch gekennzeichnet, daß das temperaturabhängig formveränderliche Element ein Thermobimetall-Element (43) ist.

9. Motor nach Anspruch 8, dadurch gekennzeichnet, daß das Thermobimetall-Element als Tellerfeder (43) ausgebildet ist, die sich einerseits am Rotor (18) und andererseits an der Abtriebswelle (13) abstützt und daß die Anordnung der Tellerfeder (43) so vorgenommen ist, daß bei Stromdurchfluß sich ihre axiale Tiefe vergrößert.

10. Motor nach Anspruch 3 oder 9, mit einem Rotor und Stator umgebenden Gehäuse, dadurch gekennzeichnet, daß die Abtriebswelle (13) einen ein Widerlager für die Druckfeder (30) bzw. die Tellerfeder (43) bildenden Flansch (21) trägt, der sich über ein Axiallager (22) am Motorgehäuse (10) abstützt.

## Claims

1. Vibration wave motor having a disc-shaped stator which contains a piezo excitation system, having a disc-shaped rotor which is seated fixed in terms of rotation on an output shaft and is aligned in parallel with the said stator, and having a contact pressure element which presses the rotor and stator against one another in the axial direction, characterized in that the contact pressure element is constructed as a force-transmitting element (20;30;43) which changes its shape as a function of temperature and is kept, during the operation of the motor, at a temperature which is above a temperature point at which the change in shape occurs, and is arranged in such a way that as a result of the change in shape, which starts when the temperature drops below the temperature point, the contact pressure between the rotor (18) and stator (14) drops away.

2. Motor according to Claim 1, characterized in that the element which changes its shape as a function of temperature is a memory-metal element, a so-called shape memory effect (SME) element.

3. Motor according to Claim 2, characterized in that the SME element is a compression spring (20) which contracts or can be compressed approximately to block length below its temperature point for the change in shape and extends to spring length above this temperature point, and in that the compression spring (20) is supported on the one hand on the axially displaceable rotor (18) and on the other hand on the output shaft (13).

4. Motor according to Claim 3, characterized in that the compression spring (20) is surrounded by a coaxial heating coil (23) whose heating power is configured such that the temperature point for the change in shape of the compression spring (20) is exceeded by supplying current to the heating coil (23).

5. Motor according to Claim 2, characterized in that the SME element is a pull wire (30) which contracts to a smaller axial length above its temperature point for the change in shape and extends, or can be extended, to the original length below this temperature point, in that the pull wire (30) extends in a hollow cylindrical bearing pin (31) on which the rotor (18) is seated in a rotatable and axially displaceable way, and in that the pull wire (30) is clamped tight on the one hand to the bearing pin (31) and on the other hand to a contact pressure plate (33) which is supported on the rotor (18) by means of an axial bearing (22') which is mounted on the bearing pin (31).

6. Motor according to Claim 5, characterized in that the pull wire (30), which preferably consists of a nickel/titanium alloy, can conduct current and in that the strength of the current can be dimensioned such that the temperature point for the change in shape is exceeded when the current is supplied to the pull wire (30).

7. Motor according to Claim 5 or 6, characterized in that the output shaft (13) is mounted in a radial bearing (12'), preferably a sliding bearing, which is aligned with the bearing pin (31), and is connected fixed in terms of rotation to the rotor (18) by means of a coupling bell (32) which engages over the contact pressure plate (33), axial bearing (22') and bearing pin (31).

8. Motor according to Claim 1, characterized in that the element which can change shape as a function of temperature is a thermobimetal element (43).

9. Motor according to Claim 8, characterized in that the thermobimetal element is constructed as a disc spring (43) which is supported on the one hand on the rotor (18) and on the other hand on the output shaft (13), and in that the arrangement of the disc spring (43) is made such that its axial depth increases when current flows through.

10. Motor according to Claim 3 or 9, having a housing which surrounds rotor and stator, characterized in that the output shaft (13) has a flange (21) which forms a counterbearing for the compression spring (30) or the disc spring (43) and is supported on the motor housing (10) by means of an axial bearing (22).

## Revendications

1. Moteurs à ondes de vibrations avec un stator en forme de disque, contenant un système de piézoexcitation, et avec un organe d'application pressant l'un contre l'autre le rotor et le stator dans le sens axial, moteur à ondes de vibrations caractérisé en ce que l'organe d'application est constitué sous la forme d'un élément (20, 30, 43) dont la forme varie en fonction de la température, qui transmet les forces et qui est maintenu, quand le moteur est en fonctionnement, à une température qui se trouve au-dessus d'un point de température auquel se produit la variation de sa forme et est disposé de telle façon qu'il n'y ait plus de force d'application entre le rotor (18) et le stator (14) causée par la variation de la forme introduite par le sous-dépassement du point de température.

2. Moteur selon la revendication 1, caractérisé en ce que l'élément dont la forme varie en fonction de la température est un élément métallique à mémoire avec une mémoire de sa forme, ce qu'on appelle un élément SME (Shape Memory Element).

3. Moteur selon la revendication 2, caractérisé en ce que l'élément SME est un ressort de compression (20), qui se contracte ou se laisse contracter en dessous de son point de température pour la variation de sa forme à peu près à sa longueur d'aplatissement maximum et s'allonge au-dessus de ce point de température à sa longueur de ressort et en ce que le ressort de compression (20) prend appui d'une part sur le rotor (18) coulissant axialement et d'autre part sur l'arbre de sortie (13).

4. Moteur selon la revendication 3, caractérisé en ce que le ressort de compression (20) est entouré d'une spirale chauffante coaxiale (23), dont la puissance de chauffe est conçue de telle façon que le point de température pour la variation de la forme du ressort de compression (20) soit dépassée quand la spirale de chauffe (23) est parcourue par le courant.

5. Moteur selon la revendication 2, caractérisé en ce que l'élément SME est un fil de traction (30), qui se contracte au-dessus de son point de température pour la variation de sa forme et prend une longueur axiale plus petite et s'allonge ou se laisse allonger en dessous de ce point de température à sa longueur initiale, en ce que le fil de traction (30) s'étend dans un tourillon cylindrique creux (31), sur lequel est monté de façon à pouvoir tourner et coulisser axialement le rotor (18) et en ce que le fil de traction (30) est serré d'une part sur le tourillon (31) et d'autre part sur une plaque de pression (33), qui prend appui sur le rotor (18) au moyen d'un palier axial (22'), maintenu sur le tourillon (31).

6. Moteur selon la revendication 5, caractérisé en ce que le fil de traction (30), qui consiste de préférence en un alliage de nickel et de titane, peut laisser passer le courant et en ce que l'intensité du courant peut être fixée de telle façon que le point de température pour la variation de la forme est franchi quand le fil de traction (30) est parcouru par le courant.

7. Moteur selon la revendication 5 ou la revendication 6, caractérisé en ce que l'arbre de sortie (13) est maintenu dans un palier radial (12') en alignement avec le tourillon (31), de préférence un palier lisse et est relié de façon solidaire en rotation au rotor (18) au moyen d'une cloche d'embrayage (32) venant en prise sur la plaque de pression (33), le palier axial (22') et le tourillon (31).

8. Moteur selon la revendication 1, caractérisé en ce que l'élément, dont la forme varie en fonction de la température, est un élément bilame thermique (43).

9. Moteur selon la revendication 8, caractérisé en ce que l'élément bilame thermique est constitué sous la forme d'un ressort à disques (43), qui prend appui d'une part sur le rotor (18) et d'autre part sur l'arbre de sortie (13) et en ce que la disposition du ressort à disques (43) est agencée de telle façon que sa profondeur axiale augmente quand le courant passe.

10. Moteur selon la revendication 3 ou 9, avec un carter entourant un rotor et un stator, moteur caractérisé en ce que l'arbre de sortie (13) porte un flasque (21) formant un contre-appui pour le ressort de compression (30) ou le ressort à disques (43), flasque qui prend appui au moyen d'un palier axial (22) sur le carter du moteur (10).
